Europäisches Patentamt

European Patent Office

Office européen des brevets

(19)

(11) Publication number: **0 202 945 B1**

# EUROPEAN PATENT SPECIFICATION

(45) Date of publication of patent specification: **16.10.91**  (51) Int. Cl.⁵: **G11B 20/00**, G11B 20/10, G11B 20/12

(21) Application number: 86303914.5

(22) Date of filing: 22.05.86

(54) Recording method and apparatus.

(30) Priority: **22.05.85 JP 109641/85**

(43) Date of publication of application:
**26.11.86 Bulletin 86/48**

(45) Publication of the grant of the patent:
**16.10.91 Bulletin 91/42**

(84) Designated Contracting States:
**DE FR GB IT NL**

(56) References cited:
**EP-A- 0 044 713**
**EP-A- 0 048 779**
**EP-A- 0 085 517**
**EP-A- 0 162 689**

(73) Proprietor: **CANON KABUSHIKI KAISHA**
**30-2, 3-chome, Shimomaruko, Ohta-ku**
**Tokyo(JP)**

(72) Inventor: **Sakata, Tguguhide**
**956-3 Minami Ohya**
**Machida-shi Tokyo(JP)**
Inventor: **Kimura, Norio**
**17-5 Ohsaki 1-chome**
**Shinagawa-ku Tokyo(JP)**
Inventor: **Takei, Masahiro**
**14-2 Chigusadai Midori-ku**
**Yokohama-shi Kanagawa-ken(JP)**

(74) Representative: **Beresford, Keith Denis Lewis**
**et al**
**BERESFORD & Co. 2-5 Warwick Court High**
**Holborn**
**London WC1R 5DJ(GB)**

## Description

The present invention relates to a method of recording an information signal, an apparatus which performs the method, and a medium which has been recorded with information by the method or apparatus.

In particular, the invention is concerned with a method of recording an information signal, comprising the steps of:
dividing the information signal into blocks;
producing a start signal and an end signal for each information signal block and for at least one block which does not include part of the information signal; and
recording the blocks of the information signal and the respective start and end signals.

In a so-called video floppy system, for example, a method for recording an audio signal on a magnetic sheet as a recording medium in addition to a video signal has been proposed.

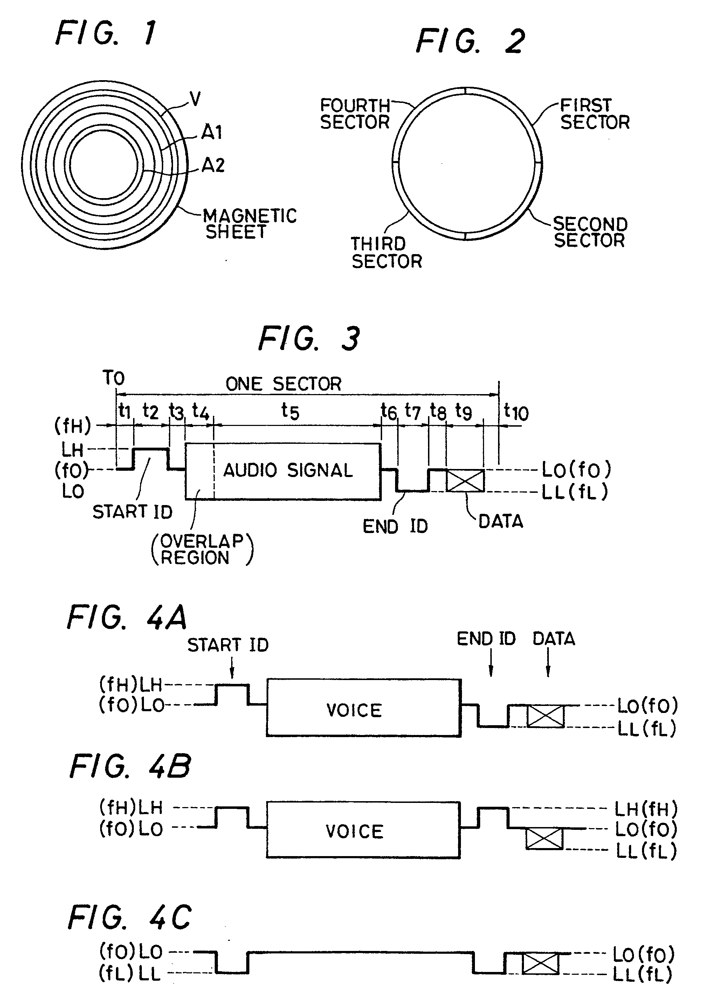

Fig. 1 is an illustration of a magnetic sheet on which audio and video signals are recorded together. For example, under the video floppy standards, a total of 50 tracks of a field video signal (V) and audio signals (A1, A2) can be recorded on a magnetic sheet in the form of concentric tracks. The audio signal is compressed along the time base to fall in a video band, and is FM modulated to be recorded on the magnetic sheet. A recording time per track is about 10 seconds when an audio hand is at 5 kHz and a time-compression ratio is 640 times, and is about 20 seconds when the audio band is at 2.5 kHz and the time-compression ratio is 1,280 times. In this case, the audio signal can be recorded either within a single track or over two tracks or more.

An audio track is divided into four sectors, as shown in Fig. 2. For example, in a 10-sec/track recording mode, 2.5 seconds of information can be recorded in a single sector.

Fig. 3 shows an audio signal and an additional signal recorded within a single sector in the form of a voltage level before being FM modulated.

Referring to Fig. 3, after a period $t_1$ has passed from time $T_0$, a start ID signal indicating the start timing of the audio signal continues for a period $t_2$, and after a blank period $t_3$, the audio signal starts. Note that a period $t_4$ is the overlap region with the previous sector, and is not present in the first sector corresponding to the starting portion of the audio signal. A remaining period $t_5$ corresponds to a new audio signal, and has a variable length. For example, in the 10-sec/track recording mode, the period $t_5$ corresponds to 2.5 seconds at maximum. After a subsequent blank period $t_6$, an end ID signal for indicating the end of the audio signal and obtaining a read timing of a data signal associated with the next audio signal continues during a period $t_7$. After a blank period $t_8$, the data signal associated with the audio signal continues for a period $t_9$, and a blank period $t_{10}$ having a variable length corresponding to the period $t_5$ of the audio signal then appears, thus completing one sector. This format is basically the same for all sectors in which audio signals are present, so that the period $t_5$ of the audio signal is variable, and a sum of periods $t_5$ and $t_{10}$ is constant. Therefore, positions of the end ID signal and the data signal change in accordance with the length of the audio signal.

The data signal includes a track number on the magnetic sheet along which a given audio signal is recorded, a starting track number and subsequent track numbers when the audio signal is recorded over several tracks, a track number recording a video signal corresponding to the audio signal, and the compression ratio of the audio signal in the form of digital data. It has been considered by the inventors to use a combination of levels of the start and end ID signals to provide certain meanings. For example, if another audio signal is present in the next sector, the start ID signal is set at HIGH level $L_H$ and the end ID signal is set at LOW level $L_L$ with respect to a reference voltage level $L_0$, as shown in Fig. 4A. If the audio signal in the corresponding sector is the last one and no audio signal follows, the start and end ID signals are both set at HIGH level $L_H$ with respect to the reference voltage level $L_0$, as shown in Fig. 4B. If no audio signal is present in the corresponding sector, the start and end ID signals are both set at LOW level $L_L$ with respect to the reference voltage level $L_0$, as shown in Fig. 4C. Note that the voltage levels $L_0$, $L_H$, and $L_L$ correspond to modulated frequencies $f_0$, $f_H$, and $f_L$ (where $f_L < f_0 < f_H$, and e.g., $f_0$ = 6 MHz, $f_H$ = 7 MHz, and $f_L$ = 5 MHz) after they are FM modulated.

In addition, "1" level of the data signal corresponds to level $L_0$, and "0" level thereof corresponds to level $L_L$.

With the combination patterns of the start and end ID signals corresponding to the specific meanings, as shown in Fig. 4, when a maximum of only one sector of an audio signal is present (or a track including such a sector is present), the signal shown in Fig. 4B is recorded in the first sector, and the signal shown in Fig. 4C is recorded in the remaining second to fourth sectors. When the audio signal ends within one track, or when the audio signal continues over several tracks, the signal shown in Fig. 4A is recorded in at least the first to third sectors of the first track. As a result, average DC levels of the signals in the base band of the former and latter cases are quite different.

The above-mentioned signals are FM recorded, as described above. In frequency modulation, if an input signal contains a variation in DC components, this variation appears directly as a variation in modulated frequency, thus interfering with satisfactory FM recording. For this reason, a circuit must be designed using DC coupling to reliably set an absolute DC level, thereby suppressing variation in the DC level.

However, this complicates the circuit arrangement when compared with a circuit using AC coupling.

## STATEMENTS OF INVENTION

According to the present invention, a method of recording information comprises the steps of:
dividing an information signal into blocks of unit recording duration,
producing a first start signal of a first polarity and a second start signal of a second polarity opposite to said first polarity with respect to a given reference level and a first end signal of said first polarity and a second end signal of said second polarity,
adding said first start signal and said second end signal to each block of information preceding a last block of information signal,
adding either said first start signal and said first end signal or said second start signal and said second end signal to each last block of information,
adding said second start signal and said first end signal to each block following a last block of information and containing no information signal,
recording each block of information signal and the respective start and end signals in sectors of a recording medium.

According to the present invention, apparatus for recording an information signal comprises:
means for dividing an information signal into blocks of unit recording duration,
means for producing a first start signal of a first polarity and a second start signal of a second polarity opposite to said first polarity with respect to a given reference level and a first end signal of said first polarity and a second end signal of said second polarity,
means for adding said first start signal and said second end signal to each block of information preceding a last block of information signal,
means for adding either said first start signal and said first end signal or said second start signal and said second end signal to each last block of information,
means for adding said second start signal and said first end signal to each block following a last block of information and containing no information signal,
means for recording each block of information signal and the respective start and end signals in sectors of a recording medium.

There follows a specific description of the invention given by way of example with reference to the drawings.

Fig. 1 is an illustration showing recording tracks on a magnetic sheet;

Fig. 2 is an illustration showing an audio track divided into sectors;

Fig. 3 is a chart showing a format of an audio signal, ID signals, and a data signal considered by the inventors;

Fig. 4 is a timing chart showing the combination patterns of start and end ID signals corresponding to specific meanings as considered by the inventors;

Fig. 5 is a timing chart showing combination patterns of start and end ID signals corresponding to specific meanings when the present invention is applied to audio signal recording described with reference to Figs. 1 to 3;

Fig. 6 is a format showing one track of the combination pattern of the ID signals explained with reference to Fig. 5; and

Fig. 7 is a block diagram of a recording apparatus according to an embodiment of the present invention, which can form the signals in the format explained with reference to Fig. 5.

## DETAILED DESCRIPTION OF THE PREFERRED EMBODIMENT

An embodiment of the present invention will be described when the present invention is applied to audio signal recording described with reference to Figs. 1 to 3.

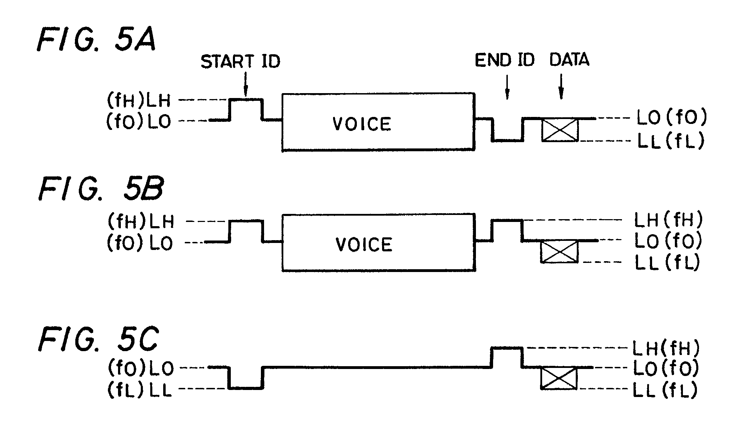

Combinations of levels (combination patterns) of start and end ID signals corresponding to specific meanings in the present invention will first be described with reference to Fig. 5, in the same manner as for Fig. 4. Note that the same reference numerals in Fig. 5 denote the same parts as in Fig. 4.

As previously described, when another audio signal is present in the next sector of a track on a magnetic recording sheet, a start ID signal is set at HIGH level $L_H$ and an end ID signal is set at LOW level $L_L$ with respect to a reference voltage level $L_0$, as shown in Fig. 5(A), in the same manner as in Fig. 4(A). When the audio signal in the sector of interest is the last one and no audio signal follows, the start and end ID signals are both set at HIGH level $L_H$ with respect to the reference voltage level $L_0$, as shown in Fig. 5(B) as in Fig. 4(B). When no audio signal is present in the sector of interest, the start ID signal is set at LOW level $L_L$ and the end ID signal is set at HIGH level $L_H$ with respect to the reference voltage level $L_0$, as shown in Fig. 5(C), which is the reverse of Fig. 5(A). When viewed in reference to the reference voltage level $L_0$, the start and end ID signals in Fig. 5(A) have an inverse relationship to each other. The ID signals in Fig. 5-

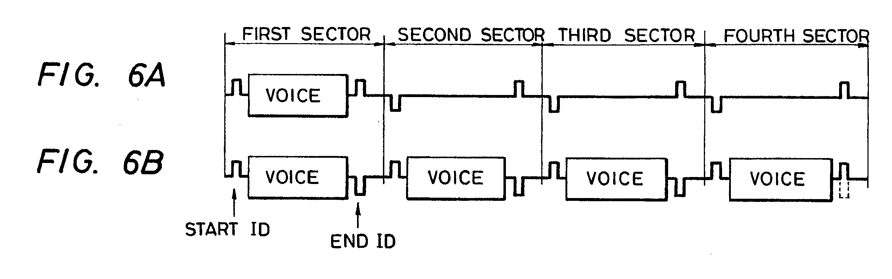

(B) have a non-inverse relationship, and the ID signals in Fig. 5(C) have an inverse relationship to each other, opposite to that in Fig. 5(A). The voltage levels $L_0$, $L_H$ and $L_L$ correspond to FM modulated frequencies $f_0$, $f_H$ and $f_L$ (where $f_L < f_0 < f_H$ and $f_0$ = 6 MHz, $f_H$ = 7 MHz and $f_L$ = 5 MHz). When the combination patterns of the start and end ID signals corresponding to the specific meanings shown in Fig. 5, when a maximum of only one sector of an audio signal is present (or a track including such a sector is present), the signal shown in Fig. 5(B) is recorded in the first sector, and the signal shown in Fig. 5(C) is recorded in the following second to fourth sectors, as shown in Fig. 6(A). When the audio signal ends within one track or in the first track when the audio signal continues over several tracks, the signal shown in Fig. 5(A) is recorded in at least the first to third sectors, as shown in Fig. 6(B). As a result, a variation in average DC levels of the signals in the former and latter cases can be minimized.

Therefore, when FM recording is performed, since a variation in modulated frequencies can be suppressed, recording can be successful when a simple circuit using AC coupling is adopted.

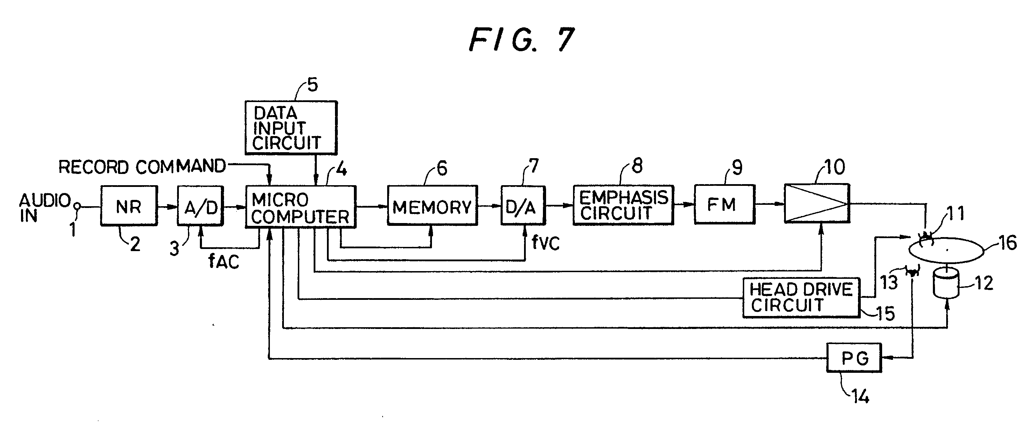

Fig. 7 shows a recording apparatus which can form signals in the format of Fig. 5, and is suitable for recording. Referring to Fig. 7, an audio signal input to a terminal 1 is supplied to an A/D converter 3 through a noise-reduction circuit 2. Next, the audio signal is sampled by the A/D converter 3 based on a sampling signal of a frequency $f_{AC}$, corresponding to a compression ratio of the audio signal, supplied from a controller 4 including a microcomputer or the like (to be referred to as a microcomputer hereinafter), to be converted into a digital signal. One sample of the digital audio signal is temporarily fetched by the microcomputer 4, and is then stored at a given address of a memory 6. In this case, the microcomputer 4 stores the audio signal in a given region of the memory 6, excluding a region necessary for storing the start and end ID signals and the data signal in address order, according to the format in Fig. 3. After one sector or track of audio signal is stored in the memory 6, the microcomputer 4 stores the start and end ID signal and the data signal in accordance with input data from a data input circuit 5 at remaining addresses of the memory 6. When a recording content of memory 6 is stored in the address order, it represents a signal format like that shown in Fig. 3.

After the above procedure, the microcomputer 4 reads out the recording content of the memory 6 based on a PG signal from a PG detector 14 at a constant frequency (rate) $f_{VC}$, and causes a D/A converter 7 to convert the readout signal into an analog signal. In this way, the D/A converter 7 outputs a compressed analog signal. In this case, if the memory 6 has a capacity corresponding to one sector, the whole content thereof can be read out in 1/240 sec, and if the capacity of the memory 6 corresponds to one track, it can be read out in 1/60 sec (assuming that a magnetic sheet 16 is rotated at 3,600 rpm).

The output from the D/A converter 7 is FM modulated by an FM modulator 9 through an emphasis circuit 8, and is then supplied to a recording amplifier 10. The recording amplifier 10 is gated only during a recording period, under the control of the microcomputer 4. Thus, the FM signal is recorded on the magnetic sheet 16 through a magnetic recording head 11.

The magnetic recording sheet 16 is rotated by a motor 12 at a constant speed under the control of the microcomputer 4. Assuming that one field of a video signal is recorded during a single rotation of the sheet 16, the rotating speed of the sheet 16 is 3,600 rpm on the basis of the NTSC method. A PG head 13 detects a PG mark (not shown) provided on the sheet 16. The PG detector 14 generates one pulse of PG signal per rotation of the sheet 16 based on the output from the PG head 13. The output from the PG detector 14 is supplied to the microcomputer 4, which controls a recording operation based on a recording command and the PG signal. In this case, the starting point of the first sector shown in Fig. 2 is controlled to have a given phase relationship with respect to the PG mark on the sheet 16. Positional control of the head 11 on the sheet 16 is performed by a head drive circuit 15 under the control of the microcomputer 4.

Since the combination patterns of the start and end ID signals corresponding to the specific meanings are as explained in Fig. 5 and a variation in average DC levels can be suppressed, the recording apparatus of Fig. 7 can adopt a simple circuit configuration using AC coupling, and can nevertheless perform satisfactory FM recording.

In the above embodiment, when no audio signal follows the sector of interest, the start and end ID signals are set at HIGH level $L_H$ with respect to the reference voltage level $L_0$, as shown in Fig. 5-(B), but can be set at LOW level $L_L$.

In addition, the data signal can be assigned immediately after the start ID signal instead of being assigned after the end ID signal. With this format, when the recording signal is reproduced, the data signal can be quickly accessed (e.g., on a time-base expansion memory during reproduction). Therefore, audio signal reproduction can be performed without any delay. Alternatively, two memories 6 can be provided and can be assigned to odd sectors and even sectors, respectively, so that the recording signals thereof are alternately read out in units of sectors to be recorded on the sheet 16. In this case, if a memory switching timing varies slightly, the data signal can be recorded without being damaged by overwriting.

A case has been exemplified wherein the present invention is applied to audio signal recording. However, the present invention is not limited to audio signal recording.

According to the present invention as described above, start and end signals indicating the start and end of an information signal are added before and after the information signal, and a new combination pattern of the start and end signals having a specific meaning can reduce a variation in average DC levels of the signal. Therefore, an information recording apparatus of this type can have a simple arrangement and can prevent a variation in modulated frequencies caused by variation in average DC levels.

## Claims

1. A method of recording information comprising the steps of:

   dividing an information signal into blocks of unit recording duration,

   producing a first start signal of a first polarity and a second start signal of a second polarity opposite to said first polarity with respect to a given reference level and a first end signal of said first polarity and a second end signal of said second polarity,

   adding said first start signal and said second end signal to each block of information preceding a last block of information signal,

   adding either said first start signal and said first end signal or said second start signal and said second end signal to each last block of information,

   adding said second start signal and said first end signal to each block following a last block of information and containing no information signal,

   recording each block of information signal and the respective start and end signals in sectors of a recording medium.

2. A method as claimed in claim 1, further comprising the step of storing the information signal prior to the dividing step.

3. A method as claimed in claim 1 or 2, wherein the start and end signals are of opposite polarities with respect to a reference level.

4. A method as claimed in any preceding claim, further comprising the step of frequency modulating the blocks of the information signal and the start and end signals prior to the recording step.

5. A method as claimed in any preceding claim, further comprising the step of time-compressing the information signal prior to the dividing step.

6. A method as claimed in any preceding claim, wherein the information signal is an audio signal.

7. An apparatus for recording an information signal comprising:

   means for dividing an information signal into blocks of unit recording duration,

   means for producing a first start signal of a first polarity and a second start signal of a second polarity opposite to said first polarity with respect to a given reference level and a first end signal of said first polarity and a second end signal of said second polarity,

   means for adding said first start signal and said second end signal to each block of information preceding a last block of information signal,

   means for adding either said first start signal and said first end signal or said second start signal and said second end signal to each last block of information,

   means for adding said second start signal and said first end signal to each block following a last block of information and containing no information signal,

   means for recording each block of information signal and the respective start and end signals in sectors of a recording medium.

8. Apparatus as claimed in claim 7, further comprising means for storing the information signal prior to the dividing step.

9. Apparatus as claimed in claim 7 or 8 in which the start and end signals are of opposite polarities with respect to a reference level.

10. Apparatus as claimed in any one of claims 7 to 9 further comprising means to frequency modulate the blocks of the information signal and the start and end signals prior to the recording step.

11. Apparatus as claimed in any one of claims 7 to 10 further comprising means for time-compressing the information signal prior to the dividing step.

12. Apparatus as claimed in any one of claims 7 to 11 in which the information signal is an audio signal.

13. Apparatus as claimed in any one of claims 7 to 12 in which the means for performing the recording step employs AC coupling.

14. An information recording medium which has been recorded with an information signal comprising:

the information signal divided into blocks, each block being recorded in a respective sector of the recording medium,

either a first start signal of a first polarity or a second start signal of a second polarity opposite to said first polarity with respect to a given reference level, the start signal being recorded in each sector at the beginning of a block of information, and

either a first end signal of said first polarity or a second end signal of said second polarity, said end signal being recorded in each sector at the end of a block of information, where

each block of information preceding a last block of information is associated with said first start signal and said second end signal,

each last block of information is associated with either said first start signal and said first end signal or said second start signal and said second end signal,

each block of information following a last block of information and containing no information signal is associated with said second start signal and said first end signal.

15. An information recording medium according to claim 14, wherein said recording medium is magnetic recording medium.

16. An information recording medium according to claim 14, wherein said recording medium is disc shape.

17. An information recording medium according to any one of claims 14 to 16, wherein said information signal is an audio signal.

18. An information recording medium according to any one of claims 14 to 16, wherein said information signal is a signal which is time-compressed.

19. An information recording medium as claimed in any one of claims 14 to 16, in which the information signal, the first start signal or the second start signal and the first end signal or the second end signal are frequency modulated and recorded on the medium respectively.

**Revendications**

1. Procédé d'enregistrement d'informations comprenant les étapes qui consistent :
à diviser un signal d'information en blocs de durée d'enregistrement unitaire,
à produire un premier signal de départ d'une première polarité et un second signal de départ d'une seconde polarité opposée à ladite première polarité par rapport à un niveau de référence donné et un premier signal de fin de ladite première polarité et un second signal de fin de ladite seconde polarité,
à additionner ledit premier signal de départ et ledit second signal de fin à chaque bloc d'information précédant un dernier bloc de signal d'information
à additionner soit ledit premier signal de départ et ledit premier signal de fin, soit ledit second signal de départ et ledit second signal de fin à chaque dernier bloc d'information,
à additionner ledit second signal de départ et ledit premier signal de fin à chaque bloc suivant un dernier bloc d'information et ne contenant aucun signal d'information,
à enregistrer chaque bloc de signal d'information et les signaux respectifs de départ et de fin dans des secteurs d'un support d'enregistrement.

2. Procédé selon la revendication 1, comprenant en outre l'étape consistant à stocker le signal d'information avant l'étape de division.

3. Procédé suivant la revendication 1 ou 2, dans lequel les signaux de départ et de fin sont de polarités opposées par rapport à un niveau de référence.

4. Procédé selon l'une quelconque des revendications précédentes, comprenant en outre l'étape qui consiste à moduler la fréquence des blocs du signal d'information et des signaux de départ et de fin avant l'étape d'enregistrement.

5. Procédé selon l'une quelconque des revendications précédentes, comprenant en outre l'étape qui consiste à comprimer dans le temps le signal d'information avant l'étape de division.

6. Procédé selon l'un quelconque des revendications précédentes, dans lequel le signal d'information est un signal audio.

7. Appareil pour enregistrer un signal d'information comportant :

des moyens destinés à diviser un signal d'information en blocs de durée d'enregistrement unitaire,

des moyens destinés à produire un premier signal de départ d'une première polarité et un second signal de départ d'une seconde polarité opposée à ladite première polarité par rapport à un niveau de référence donné et un premier signal de fin de ladite première polarité et un second signal de fin de ladite seconde polarité,

des moyens destinés à additionner ledit premier signal de départ et ledit second signal de fin à chaque bloc d'information précédant un dernier bloc de signal d'information,

des moyens destinés à additionner soit ledit premier signal de départ et ledit premier signal de fin, soit ledit second signal de départ et ledit second signal de fin à chaque dernier bloc d'information,

des moyens destinés à additionner ledit second signal de départ et ledit premier signal de fin à chaque bloc suivant un dernier bloc d'information et ne contenant pas de signal d'information,

des moyens destinés à enregistrer chaque bloc de signal d'information et les signaux respectifs de départ et de fin dans des secteurs d'un support d'enregistrement.

8. Appareil selon la revendication 7, comportant en outre des moyens destinés à stocker le signal d'information avant l'étape de division.

9. Appareil suivant la revendication 7 ou 8, dans lequel les signaux de départ et de fin sont de polarités opposées par rapport à un niveau de référence.

10. Appareil selon l'une quelconque des revendications 7 à 9, comportant en outre des moyens destinés à moduler la fréquence des blocs du signal d'information et des signaux de départ et de fin avant l'étape d'enregistrement.

11. Appareil selon l'une quelconque des revendications 7 à 10, comportant en outre des moyens destinés à comprimer dans le temps le signal d'information avant l'étape de division.

12. Appareil selon l'une quelconque des revendications 7 à 11, dans lequel le signal d'information est un signal audio.

13. Appareil selon l'une quelconque des revendications 7 à 12, dans lequel les moyens destinés à effectuer l'étape d'enregistrement utilisent un couplage alternatif.

14. Support d'enregistrement d'informations sur lequel a été enregistré un signal d'information, comportant :

le signal d'information divisé en blocs, chaque bloc étant enregistré dans un secteur respectif du support d'enregistrement,

soit un premier signal de départ d'une première polarité, soit un second signal de départ d'une seconde polarité opposée à ladite première polarité par rapport à un niveau de référence donné, le signal de départ étant enregistré dans chaque secteur au commencement d'un bloc d'information, et

soit un premier signal de fin de ladite première polarité, soit un second signal de fin de ladite seconde polarité, ledit signal de fin étant enregistré dans chaque secteur à la fin d'un bloc d'information, où

chaque bloc d'information précédant un dernier bloc d'information est associé audit premier signal de départ et audit second signal de fin,

chaque dernier bloc d'information est associé soit audit premier signal de départ et audit premier signal de fin, soit audit second signal de départ et audit second signal de fin,

chaque bloc d'information suivant un dernier bloc d'information et ne contenant aucun signal d'information est associé audit second signal de départ et audit premier signal de fin.

15. Support d'enregistrement d'information selon la revendication 14, dans lequel ledit support d'enregistrement est un support d'enregistrement magnétique.

16. Support d'enregistrement d'information selon la revendication 14, dans lequel ledit support d'enregistrement est en forme de disque.

17. Support d'enregistrement d'information selon l'une quelconque des revendications 14 à 16, dans lequel ledit signal d'information est un signal audio.

18. Support d'enregistrement d'information selon l'une quelconque des revendications 14 à 16, dans lequel ledit signal d'information est un signal qui est comprimé dans le temps.

19. Support d'enregistrement d'information selon l'une quelconque des revendications 14 à 16, dans lequel le signal d'information, le premier signal de départ ou le second signal de départ et le premier signal de fin ou le second signal de fin sont modulés en fréquence et enregistrés sur le support respectivement.

**Patentansprüche**

1. Verfahren zur Informationsaufzeichnung, mit Schritten zum
Teilen eines Informationssignals in Blöcke einheitlicher Aufzeichnungsdauer,
Erzeugen eines ersten Startsignals einer ersten Polarität und eines zweiten Startsignals einer in Bezug auf einen vorgegebenen Bezugspegel zur ersten Polarität entgegengesetzten zweiten Polarität sowie eines ersten Endsignals der ersten Polarität und eines zweiten Endsignals der zweiten Polarität,
Hinzufügen des ersten Startsignals und des zweiten Endsignals zu jedem Informationsblock, der einem letzten Informationssignalblock vorangeht,
Hinzufügen entweder des ersten Startsignals und des ersten Endsignals oder des zweiten Startsignals und des zweiten Endsignals zu jedem letzten Informationsblock,
Hinzufügen des zweiten Startsignals und des ersten Endsignals zu jedem Block, der auf einen letzten Informationsblock folgt und der kein Informationssignal enthält, und
Aufzeichnen eines jeden Informationssignalblocks und der betreffenden Start- und Endsignale in Sektoren eines Aufzeichnungsträgers.

2. Verfahren nach Anspruch 1, das ferner den Schritt zum Speichern des Informationssignals vor dem Teilungsschritt umfaßt.

3. Verfahren nach Anspruch 1 oder 2, bei dem die Start- und Endsignale in Bezug auf einen Bezugspegel entgegengesetzte Polaritäten haben.

4. Verfahren nach irgendeinem vorangehenden Anspruch, das ferner den Schritt zur Frequenzmodulation der Informationssinalblöcke und der Start- und Endsignale vor dem Aufzeichnungsschritt umfaßt.

5. Verfahren nach irgendeinem vorangehenden Anspruch, das ferner den Schritt zum zeitlichen Komprimieren des Informationssignals vor dem Teilungsschritt umfaßt.

6. Verfahren nach irgendeinem vorangehenden Anspruch, bei dem das Informationssignal ein Tonfrequenzsignal ist.

7. Gerät zum Aufzeichnen eines Informationssigals, mit einer Einrichtung zum Teilen eines Informationssignals in Blöcke einheitlicher Aufzeichnungsdauer,
einer Einrichung zum Erzeugen eines ersten Startsignals einer ersten Polarität und eines zweiten Startsignals einer in Bezug auf einen vorgegebenen Bezugspegel zur ersten Polarität entgegengesetzten zweiten Polarität sowie eines ersten Endsignals der ersten Polarität und eines zweiten Endsignals der zweiten Polarität,
einer Einrichtung zum Hinzufügen des ersten Startsignals und des zweiten Endsignals zu jedem Informationsblock, der einem letzten Informationssignalblock vorangeht,
einer Einrichtung zum Hinzufügen entweder des ersten Startsignals und des ersten Endsignals oder des zweiten Startsignals und des zweiten Endsignals zu jedem letzten Informationsblock,
einer Einrichtung zum Hinzufügen des zweiten Startsignals und des ersten Endsignals zu jedem Block, der auf einen letzten Informationsblock folgt und der kein Informationssignal enthält, und
einer Einrichtung zum Aufzeichnen eines jeden Informationssignalblocks und der betreffenden Start- und Endsignale in Sektoren eines Aufzeichnungsträgers.

8. Gerät nach Anspruch 7, das ferner eine Einrichtung zum Speichern des Informationssignals vor dem Teilen enthält.

9. Gerät nach Anspruch 7 oder 8, in dem die Start- und Endsignale in Bezug auf einen Bezugspegel entgegengesetzte Polaritäten haben.

10. Gerät nach irgendeinem der Ansprüche 7 bis 9, das ferner eine Einrichtung zur frequenzmodulation der Informationssignalblöcke und der Start- und Endsignale vor dem Aufzeichnen enthält.

11. Gerät nach irgendeinem der Ansprüche 7 bis 10, das ferner eine Einrichtung zum zeitlichen Komprimieren des Informationssignals vor dem Teilen enthält.

12. Gerät nach irgendeinem der Ansprüche 7 bis 11, in dem das Informationssignal ein Tonfrequenzsignal ist.

13. Gerät nach irgendeinem der Ansprüche 7 bis 12, in dem in der Einrichtung zum Aufzeichnung eine Wechselspannungskoppelung angewandt ist.

14. Informationsaufzeichnungsträger, der mit einem Informationssignal beschriftet wurde, enthaltend
das in Blöcke unterteilte Informationssignal, wobei jeder Block in einem betreffenden Sektor des Aufzeichnungsträgers aufgezeichnet ist,
entweder ein erstes Startsignal einer ersten Polarität oder ein zweites Startsignal einer in Bezug auf einen vorgegebenen Bezugspegel zur ersten Polarität entgegengesetzten zweiten Polarität, wobei das Startsignal in jedem Sektor am Anfang eines Informationsblocks aufgezeichnet ist, und
entweder ein erstes Endsignal der ersten Polarität oder ein zweites Endsignal der zweiten Polarität, wobei das Endsignal in jedem Sektor am Ende eines Informationsblocks aufgezeichnet ist, wobei
jedem Informationsblock, der einem letzten Informationsblock vorangeht, das erste Startsignal und das zweite Endsignal hinzugefügt ist,
jedem letzten Informationsblock entweder das erste Startsignal und das erste Endsignal oder das zweite Startsignal und das zweite Endsignal hinzugefügt ist und
jedem Block, der auf einen letzten Informationsblock folgt und der kein Informationssignal enthält, das zweite Startsignal und das erste Endsignal hinzugefügt ist.

15. Informationsaufzeichnungsträger nach Anspruch 14, bei dem der Aufzeichnungsträger ein Magnetaufzeichnungsträger ist.

16. Informationsaufzeichnungsträger nach Anspruch 14, bei dem der Aufzeichnungsträger plattenförmig ist.

17. Informationsaufzeichnungsträger nach irgendeinem der Ansprüche 14 bis 16, bei dem das Informationssignal ein Tonfrequenzsignal ist.

18. Informationsaufzeichnungträger nach irgendeinem der Ansprüche 14 bis 16, bei dem das Informationssignal ein zeitlich komprimiertes Signal ist.

19. Informationsaufzeichnungsträger nach irgendeinem der Ansprüche 14 bis 16, bei dem das Informationssignal, das erste Startsignal oder das zweite Startsignal und das erste Endsignal oder das zweite Endsignal jeweils frequenzmoduliert und auf dem Medium aufgezeichnet sind.

# FIG. 1

V
A1
A2
MAGNETIC SHEET

# FIG. 2

FOURTH SECTOR
FIRST SECTOR
SECOND SECTOR
THIRD SECTOR

# FIG. 3

# FIG. 4A

# FIG. 4B

# FIG. 4C

10

## FIG. 5A

START ID     END ID   DATA

(fH)LH
(fO)LO    VOICE    LO(fO)
         LL(fL)

## FIG. 5B

(fH)LH
(fO)LO    VOICE    LH(fH)
         LO(fO)
         LL(fL)

## FIG. 5C

         LH(fH)
(fO)LO    LO(fO)
(fL)LL    LL(fL)

EP 0 202 945 B1

FIG. 6A

FIG. 6B

FIRST SECTOR | SECOND SECTOR | THIRD SECTOR | FOURTH SECTOR

VOICE

VOICE VOICE VOICE VOICE

START ID  END ID

EP 0 202 945 B1

# FIG. 7

EP 0 202 945 B1